# EUROPEAN PATENT APPLICATION

(11) **EP 4 746 253 A1**
(43) Date of publication of application: **20.05.2026**
(21) Application number: 25211247.9
(22) Date of filing: 27.10.2025
(51) Int. Cl.: H02K 1/24, H02K 1/27, H02K 21/46

(54) **LINE START PERMANENT MAGNET ASSISTED SYNCHRONOUS RELUCTANCE MOTOR**

(30) Priority: 13.11.2024 US 202418946262
(71) Applicant: ABB SCHWEIZ AG, 5400 Baden (CH)
(72) Inventor: BRINKLEY, Timothy Lee, Fort Smith, 72916 (US)
(74) Representative: Maiwald GmbH

(57) **Abstract**

A rotating electric machine can include a rotor core (130) having a body (132) including a first side (138), a second side (140), and an outer circumferential surface (142) extending therebetween. A plurality of slots (150) can longitudinally extend through the body (132) including a plurality of first slots (152) positioned in a radial direction along a radial centerline (R₁, R₂, R₃, R₄) between the axis (A) and the outer circumferential surface (142) and a plurality of second slots (154) positioned in a circumferentially outwardly direction between the plurality of first slots (152) and the outer circumferential surface (142). Each end of each first slot (152) can be located adjacent one of the second slots (154). At least one permanent magnet (112) can be positioned in at least one of the first slots (152), and at least one rotor bar (114) can be positioned in each second slot (154). The rotor core (130) includes a rotor topology to decrease a locked rotor amps and increase a locked rotor torque at startup.

## Description

### FIELD

The present disclosure relates to the field of rotating electric machines. More particularly, to line start permanent magnet assisted synchronous reluctance motors.

### BACKGROUND

Rotating electric machines can include electric motors that convert electrical energy in the form of alternating current or direct current into mechanical energy. Electric motors typically include a stator, a rotor core located in the stator and rotatable on an axis relative the stator, and a motor shaft connected to the rotor. Generally, electric motors operate through the interaction of an electromagnetic field induced at a coil winding with the magnetic field of the motor so as to generate torque that can be applied to the motor shaft. The coil winding can include one or more electrical conductors that can be wound around the stator so as to be arranged in the stator slots. The magnetic field of the motor can be from magnets, e.g., permanent magnets, or from a coil winding located at the rotor.

### SUMMARY

In some embodiments, a rotor of an electric machine includes a rotor core including a body rotatable about an axis and including a first side, a second side, and an outer circumferential surface extending between the first side and the second side, the body including a plurality of slots extending through the body from the first side to the second side defining one or more poles, the plurality of slots including a plurality of first slots positioned in a radial direction along a radial centerline between the axis and the outer circumferential surface of the body, and a plurality of second slots positioned in a circumferentially outwardly direction between the plurality of first slots and the outer circumferential surface of the body, wherein each end of each of the plurality of first slots is located adjacent one of the plurality of second slots, at least one permanent magnet positioned in at least one of the plurality of first slots, and at least one rotor bar positioned in each of the plurality of second slots.

In some embodiments, the rotor further includes a cage including a first ring member located at a first end of the body, and a second ring member located at a second end of the body, wherein each of the at least one rotor bar is in electrical connection with the first ring member and the second ring member, wherein a rotating electromagnetic field in the electric machine being configured to induce an electric current in the cage to create a secondary electromagnetic field at the rotor core, and wherein the rotor core includes a rotor topology configured to decrease a locked rotor amps and increase a locked rotor torque at startup of the electric machine.

In some embodiments, at the rotor, wherein the body includes one or more layers in a stacked arrangement including at least a first layer defining the first side and a second layer defining the second side, and the first layer and the second layer defining the outer circumferential surface.

In some embodiments, at the rotor, wherein the plurality of first slots includes an inner slot including a first length positioned adjacent the axis of the body, an outer slot including a second length positioned between the inner slot and the outer circumferential surface, and at least one central slot including at least one third length located between the inner slot and the outer slot, wherein the first length is greater than the second length and the at least one third length, and the at least one third length is greater than the second length, and wherein the at least one permanent magnet is configured to provide a portion of a direct axis flux at the rotor core so as to increase a power factor of a stator current of a stator during steady state operation, the electric machine including the stator to generate a rotating electromagnetic field in response to electric current being applied to one or more electrical conductors wound through the stator.

In some embodiments, at the rotor, wherein the at least one permanent magnet includes a first magnet positioned in at least one of the inner slot or the at least one central slot.

In some embodiments, at the rotor, wherein the at least one permanent magnet includes a first permanent magnet positioned in the inner slot, and a second permanent magnet positioned in the at least one central slot.

In some embodiments, at the rotor, wherein each of the plurality of first slots includes a central portion extending radially inwardly relative a respective ends so that each of the plurality of first slots forms a u-shape.

In some embodiments, at the rotor, wherein the plurality of second slots further includes a slot positioned between the plurality of first slots and the outer circumferential surface along the radial centerline.

In some embodiments, at the rotor, wherein each of the plurality of second slots includes a first side, and a second side opposite the first side, wherein the second side is located radially outward relative the first side, and the second side is adjacent the outer circumferential surface of the body, and wherein each of the plurality of second slots includes a variable radial thickness between the first side and the second side, and wherein the at least one rotor bar fills a space of each of the plurality of second slots defined by the variable radial thickness.

In some embodiments, at the rotor, wherein a radial thickness of each of the plurality of second slots gradually increases from a first end of the second side towards a center of the second side, and gradually decreases from the center of the second side towards a second end of the second side, and wherein a radial thickness of the body between the second side of each of the plurality of second slots and the outer circumferential surface gradually decreases from the first end of the second side towards the center of the second side, and gradually increases from the center of the second side towards the second end of the second side.

In some embodiments, a rotating electric machine includes a stator core, and a rotor core including a body including a one or more layers, the body being rotatable about an axis and including a first side, a second side, and an outer circumferential surface extending between the first side and the second side, the body including a plurality of slots extending through the body from the first side to the second side defining one or more poles, the plurality of slots including a plurality of first slots positioned in a radial direction along a radial centerline between the axis and the outer circumferential surface of the body, a plurality of second slots positioned in a circumferentially outwardly direction between the plurality of first slots and the outer circumferential surface of the body, at least one permanent magnet positioned in at least one of the plurality of first slots, and at least one rotor bar positioned in each of the plurality of second slots, wherein each end of each of the plurality of first slots is located adjacent one of the plurality of second slots.

In some embodiments, the rotating electric machine further includes a cage including a first ring member located at a first end of the body, and a second ring member located at a second end of the body, wherein each of the at least one rotor bar positioned in each of the plurality of second slots is in electrical connection with the first ring member and the second ring member, and a shaft member axially extending through the rotor core, the shaft member configured to translate a rotation of the rotor core to another device, wherein the rotor core includes a rotor topology configured to decrease a locked rotor amps and increase a locked rotor torque during startup of the rotating electric machine and configured to have a high power factor resulting in reduced resistive losses in the stator core during steady state operation.

In some embodiments, at the rotating electric machine, wherein the plurality of first slots includes an inner slot including a first length positioned adjacent the axis of the body, an outer slot including a second length positioned between the inner slot and the outer circumferential surface, and at least one central slot including at least one third length located between the inner slot and the outer slot, wherein the first length is greater than the second length and the at least one third length, and the at least one third length is greater than the second length, and wherein the at least one permanent magnet includes a first magnet positioned in at least one of the inner slot or the at least one central slot, and wherein the at least one permanent magnet is configured to provide a portion of a direct axis flux at the rotor core so as to increase a power factor of a stator current of a stator during steady state operation.

In some embodiments, at the rotating electric machine, wherein the at least one permanent magnet includes a first permanent magnet positioned in the inner slot, and a second permanent magnet positioned in the at least one central slot.

In some embodiments, at the rotating electric machine, wherein each of the plurality of first slots includes a central portion extending radially inwardly relative a respective ends so that each of the plurality of first slots forms a u-shape, and wherein the plurality of second slots further includes a slot positioned between the plurality of first slots and the outer circumferential surface along the radial centerline.

In some embodiments, at the rotating electric machine, wherein each of the plurality of second slots includes a first side, and a second side opposite the first side, wherein the second side is located radially outward relative the first side, and the second side is adjacent the outer circumferential surface of the body, and wherein each of the plurality of second slots includes a variable radial thickness between the first side and the second side, and wherein the at least one rotor bar fills a space of each of the plurality of second slots defined by the variable radial thickness.

In some embodiments, at the rotating electric machine, wherein a radial thickness of each of the plurality of second slots gradually increases from a first end of the second side towards a center of the second side, and gradually decreases from the center of the second side towards a second end of the second side, and wherein a radial thickness of the body between the second side of each of the plurality of second slots and the outer circumferential surface gradually decreases from the first end of the second side towards the center of the second side, and gradually increases from the center of the second side towards the second end of the second side.

In some embodiments, a method for assembling a rotor core of a rotating electric machine, the method including providing the rotor core including a body defining one or more poles, wherein each pole including a plurality of first slots positioned in a radial direction along a radial centerline between an axis and an outer circumferential surface of the body and a plurality of second slots positioned in a circumferentially outwardly direction between the plurality of first slots and the outer circumferential surface of the body, wherein each end of each of the plurality of first slots is located adjacent one of the plurality of second slots, and wherein the plurality of second slots further includes a slot positioned between the plurality of first slots and the outer circumferential surface along the radial centerline, positioning at least one permanent magnet in at least one of the plurality of first slots, and positioning at least one rotor bar in each slot of the plurality of second slots, wherein the rotor core is rotatable about the axis in the rotating electric machine.

In some embodiments, the method further includes forming one or more layers from a magnetically permeable material, each layer including the plurality of first slots and the plurality of second slots extending therethrough, arranging the one or more layers in a stacked arrangement to define the rotor core, positioning a first ring member at a first side of the rotor core and a second ring member at a second side of the rotor core opposite the first side, and placing the first ring member and the second ring member in electrical connection with each of the at least one rotor bar positioned in each of the plurality of second slots, wherein the rotor core includes a rotor topology configured to decrease a locked rotor amps and increase a locked rotor torque at startup at the rotating electric machine, a high power factor resulting in decreased resistive losses in a stator, and seamlessly transition between startup and steady state operation.

In some embodiments, wherein the plurality of first slots includes an inner slot including a first length positioned adjacent the axis of the body, an outer slot including a second length positioned between the inner slot and the outer circumferential surface, and at least one central slot including at least one third length located between the inner slot and the outer slot, wherein the first length being greater than the second length and the at least one third length, and the at least one third length being greater than the second length, and the at least one permanent magnet includes a first magnet positioned in at least one of the inner slot or the at least one central slot, and each of the plurality of second slots includes a first side, and a second side opposite the first side, the second side being located radially outward relative the first side, and the second side being adjacent the outer circumferential surface of the body, wherein each of the plurality of second slots includes a variable radial thickness between the first side and the second side, a radial thickness of each of the plurality of second slots gradually increases from a first end of the second side towards a center of the second side, and gradually decreases from the center of the second side towards a second end of the second side, and a radial thickness of the body between the second side of each of the plurality of second slots and the outer circumferential surface gradually decreases from the first end of the second side towards the center of the second side, and gradually increases from the center of the second side towards the second end of the second side, and the at least one rotor bar fills a space of each of the plurality of second slots defined by the variable radial thickness.

### BRIEF DESCRIPTION OF THE DRAWINGS

Some embodiments of the disclosure are herein described, by way of example only, with reference to the accompanying drawings. With specific reference now to the drawings in detail, it is stressed that the embodiments shown are by way of example and for purposes of illustrative discussion of embodiments of the disclosure. In this regard, the description taken with the drawings makes apparent to those skilled in the art how embodiments of the disclosure may be practiced.
FIG. 1 is a side view of a schematic diagram illustrating an example system, according to some embodiments.
FIG. 2 is a front sectional view of a portion of the system in FIG. 1, according to some embodiments.
FIG. 3 is a front sectional view of a portion of the rotor core of FIG. 1, according to some embodiments.
FIG. 4 is an expanded view of the rotor core in FIG. 3, according to some embodiments.
FIG. 5 is a side perspective view of the rotor core in FIG. 1, according to some embodiments.
FIG. 6 is a flow diagram of an example method for manufacturing a rotor core, according to some embodiments.
FIG. 7 is a flow diagram of an example method for manufacturing the rotor core, according to some embodiments.

### DETAILED DESCRIPTION

Rotating electric machines can include electric motors that convert electrical energy in the form of alternating current (AC) or direct current (DC) into mechanical energy. These electric motors can be used in a variety of different applications such as, for example, electric vehicles, household items, industrial applications, robotics, medical devices, aerospace applications, etc. AC electric motors can include induction motors, permanent magnet motors, synchronous motors, brushless motors, and reluctance motors. AC electric motors can include induction motors, permanent magnet motors, synchronous motors, brushless motors, and reluctance motors.

Electric motors generally include a stator core, a rotor core rotatable on an axis in the stator core, and a motor shaft mechanically coupled to the rotor. Electric motors operate through the interaction of an electromagnetic field induced at a coil winding with the magnetic field of the motor to generate torque that can be applied to the motor shaft. The coil winding can include one or more electrical conductors that are wound around the stator at the stator slots. The magnetic field of the motor can be from magnets, e.g., permanent magnets, or from a coil winding located at the rotor.

In electric motors, the rotor core topology can be dependent on the desired operational characteristics of the motor including, for example, starting torque, starting current, speed regulation, steady state performance, power factor, losses including rotor losses and stator losses, slip, torque, and torque ripple, among other considerations. In addition, the operational characteristics of the motor can be affected by factors including, for example, the number of stator slots, pole pairs, motor application, operating frequency, desired rotor resistance and inductance, etc., all of which can be considerations when designing the electric motor.

Various embodiments of the present disclosure relate to a rotating electric machine. The rotating electric machine can be an electric motor. The electric motor can include one or more components including, but not limited to, a stator core, a rotor core, a rotor cage, a shaft, and a stator winding. The stator winding can be formed of one or more electrical conductors wound around the stator at the stator slots. One or more phases of AC power can be applied to the one or more electrical conductors so as to generate a rotating electromagnetic field at the stator core windings that interacts with the magnetic field of the rotor to generate torque. The shaft can be fixedly connected to the rotor core and extend therethrough. The shaft can be configured to translate a rotor torque generated during operation of the electric machine to an external machine or component. In some embodiments, the electric machine can be a line start permanent magnet assisted synchronous reluctance (PMASynR) motor.

In the electric machine, the rotor core can be positioned in the stator core and rotatable about an axis. The rotor core can be formed of a magnetically permeable material. The rotor core can include a body that includes a plurality of slots that defines one or more poles. At each pole, the plurality of slots can include a set of first slots positioned along a radial centerline of the pole in a radial direction between an inner diameter of the rotor core and an outer circumferential surface of the rotor core, and a set of second slots positioned between the set of first slots and the outer circumferential surface of the rotor core. In addition, at each pole, the electric machine can include at least one permanent magnet located in at least one of the set of first slots of the rotor core and can include at least one rotor bar located in each of the set of second slots of the rotor core. In this regard, the rotor core can include a unique rotor topology configured to provide the electric motor with certain desired operating characteristics, as will be further described herein.

According to various embodiments of the present disclosure, the rotor core topology can be configured to provide the electric machine with certain desired starting characteristics, steady state operating characteristics, and transition characteristics from asynchronous operation to synchronous operation. In this regard, at each pole of the one or more poles of the rotor core, the rotor core topology can be defined by the rotor body (e.g., flux guides) and the set of first slots (e.g., flux barriers). The set of first slots can include a permanent magnet. In some embodiments, an interior most slot of the set of first slots closest to a rotor inner diameter and the motor shaft can include the permanent magnet. In other embodiments, one or more interior most slots of the set of first slots closest to the rotor inner diameter and the motor shaft can include permanent magnets. For example, the two interior more slots of the set of first slots that are closest to the rotor inner diameter and the motor shaft can include permanent magnets.

In addition, between the set of first slots and the outer circumferential surface of the rotor core, the rotor core can include a set of second slots that defines a rotor slot geometry of the electric machine. In some embodiments, each end of each of the set of first slots can include a slot of the set of second slots. In some embodiments, the set of second slots can further include a slot located along a radial centerline between the outermost slot of the set of first slots and the outer circumferential surface. Each slot of the set of second slots can include a rotor bar positioned therein. In this regard, the rotor slot geometry can be designed so as to provide the electric machine with a desired operational characteristics during one or more stages of operation. Additionally, a standard short circuit ring can be added to the end of each rotor to short the rotor bars together to improve the starting operational characteristics of the electric machine.

The rotor topology can be configured to improve an efficiency of the electric machine during one or more stages of operation. When the electric machine is started, the rotor topology can be configured to increase rotor core losses so as to minimize locked rotor amps and maximize locked rotor torque. As the rotor accelerates to transition the electric machine from starting to synchronous operation, the magnetic field at the electric machine can pass the D-axis and the rotor topology can be configured to enable reluctance forces to increase and further accelerate the rotor to synchronous speed so the rotor can latch into synchronous operation. During synchronous operation (e.g., steady state operation) of the electric machine, the rotor topology can be configured to reduce or eliminate low frequency losses and resistive losses in the rotor bars and the rotor topology can be configured to provide a high power factor resulting in minimized resistive losses in the stator winding(s).

The embodiments of the present disclosure can include one or more improvements that improve the efficiency of electric machines compared with other known motors. Induction motors, for example, can operate at variable speed and have self-starting torque during starting. However, induction motors can have a low power factor that decreases with load during steady state operation, thereby drawing more current during light load conditions. Synchronous motors, for example, can eliminate low frequency losses in the rotor during synchronous operation. However, synchronous motors cannot start across the line without the addition of a rotor cage to act as a damper winding to provide the torque needed to start the motor and to reduce oscillations in the rotor.

Line start synchronous reluctance motors, for example, are synchronous reluctance motors with a rotor cage. At a slip of 1, an electric current is induced in the rotor cage and produces torque. As the motor accelerates and reaches a speed close to being synchronous with the rotating electromagnetic field, the rotor may latch into synchronous operation. However, because line start synchronous reluctance motors operate on reluctance forces, these motors can have a low power factor compared to other motors, e.g., induction motors and permanent magnet motors. This low power factor results in increased resistive losses in the stator core of the line start synchronous reluctance motors, which can result in increased current being drawn in the stator winding without a proportional increase in torque production due to decreased motor efficiency. Accordingly, line start synchronous reluctance motors can demonstrate poor steady state performance compared with embodiments of the present disclosure.

In addition, line start permanent magnet motors, for example, can have a high power factor and minimal, or very little, rotor losses when operating in steady state synchronous operation. The high power factor at these motors can also minimize resistive losses at the stator winding. However, line start permanent magnet motors can have high starting currents and relatively low starting torques. Accordingly, line start permanent magnet motors can demonstrate poor starting performance compared with embodiments of the present disclosure.

The embodiments of the present disclosure can have a unique rotor core topology that provides the electric motor with certain desired operational characteristics including, but not limited to, starting characteristics that increase resistive losses at the rotor core resulting in minimized starting amps (e.g., locked rotor amps) and maximized starting torque (e.g., locked rotor torque), steady state operation characteristics that reduce or eliminate low frequency losses in the rotor core and that provides a high power factor in the stator core resulting in minimized resistive losses in the stator core so as to decrease the current drawn by the stator winding for generating torque in the electric motor, and transitional characteristics such that the electric machine can seamlessly transition between asynchronous and synchronous operation. Accordingly, the embodiments of the present disclosure can be configured to mitigate or eliminate limitations associated with the aforementioned other types of electric motors such as, for example, high starting current and low starting torques in the rotor core during the starting phase and a low power factor resulting in high resistive losses in the stator core during steady state operation.

Among those benefits and improvements that have been disclosed, other objects and advantages of this disclosure will become apparent from the following description taken in conjunction with the accompanying figures. Detailed embodiments of the present disclosure are disclosed herein; however, it is to be understood that the disclosed embodiments are merely illustrative of the disclosure that may be embodied in various forms. In addition, each of the examples given regarding the various embodiments of the disclosure which are intended to be illustrative, and not restrictive.

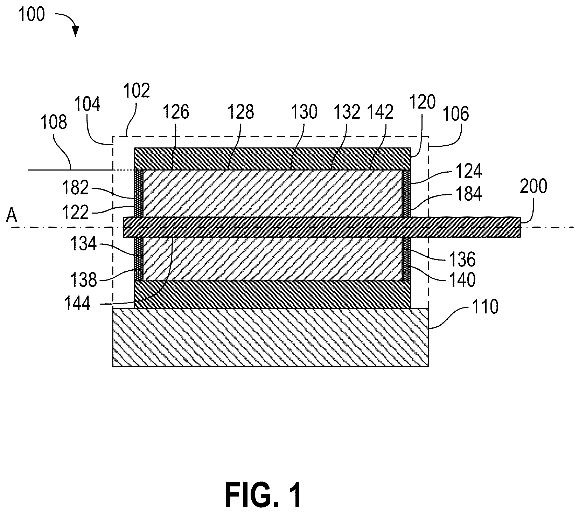

FIG. 1 is a side view of a schematic diagram illustrating an example system 100, according to some embodiments.

System 100 can include an electric motor 102. The electric motor 102 can be configured to utilize AC power to convert electrical energy into mechanical energy. In some embodiments, the electric motor 102 can be referred to as a line start motor, line start permanent magnet assisted motor, or line start permanent magnet assisted synchronous reluctance motor. The electric motor 102 can include a rotor core topology (e.g., rotor slot geometry) configured to provide the electric motor 102 with operational characteristics similar to an induction motor for starting, a permanent magnet motor for steady state operation, and a reluctance motor for transition from asynchronous to synchronous operation.

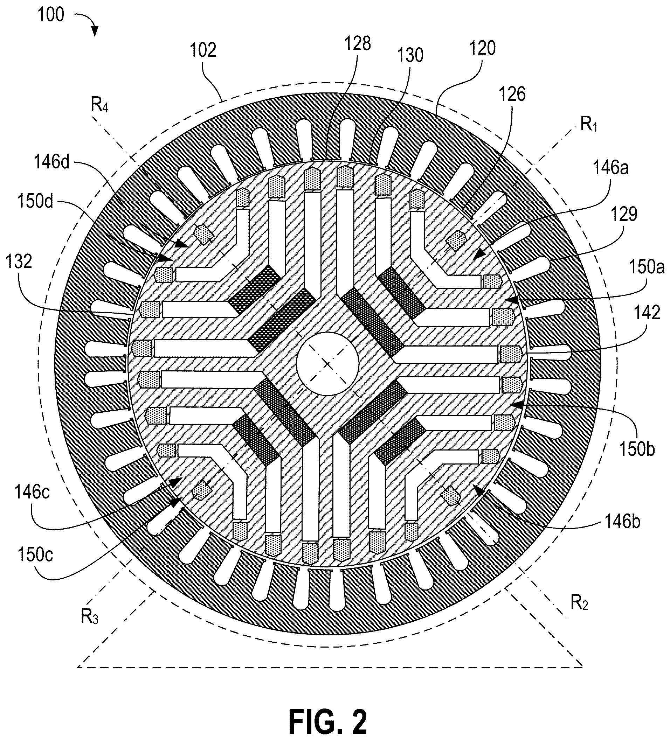

The electric motor 102 can include a first end 104 and a second end 106 opposite the first end 104. The electric motor 102 can include a stator core 120, a rotor core 130, and a motor shaft 190. The electric motor 102 can include one or more electrical conductors 108 wound through one or more components of the electric motor 102. The electric motor 102 can include at least one permanent magnet 112 (FIG. 2) and at least one rotor bar 114 (FIG. 2). The electric motor 102 can also include a rotor cage 180.

The electric motor 102 can include stator core 120. The stator core 120 can include a first end 122 and a second end 124 opposite the first end 122. The stator core 120 can include a stator core bore 126 that longitudinally extends in an axial direction therethrough from the first end 122 to the second end 124, the stator core bore 126 can define an inner surface 128. The stator core 120 can include a plurality of slots (e.g., teeth) formed at the inner surface 128 of the stator core bore 126, and the one or more electrical conductors 108 can be wound through the plurality of slots so as to form the stator coil winding. The stator core winding can operate on one or more phases. In some embodiments, the stator core winding can operate on a single-phase. In some embodiments, the stator core winding can operation on two-phases. In some embodiments, the stator core winding can operate on three phases. In addition, the electric motor 102 can include a base support 110 configured to support at least one of the stator core 120, rotor core 130, or motor shaft 190.

When the one or more phases of AC power is supplied to the one or more electrical conductors 108 of electric motor 102, the, the stator core 120 can generate a rotating electromagnetic field induced at the stator coil winding configured to interact with the magnetic field of the electric motor 102 so as to generate torque so as to cause the rotor core 130 to rotate in the stator core bore 126 about an axis (A).

The stator core 120 can be made of materials including, but not limited to, electrical steel, silicon steel, and the like. In some embodiments, the stator core 120 can include an insulation coating one or more surfaces of the stator core 120. In some embodiments, the stator core 120 can be made of one or more steel laminations that can be stacked together to form a body of the stator core 120. In an example, the steel laminations can be connected together using one or more fasteners. For example, the stator core 120 can be formed of thousands, tens of thousands, or hundreds of thousands of laminations.

The electric motor 102 can include rotor core 130. The rotor core 130 can be positioned in the stator core 120. That is, the rotor core 130 can be positioned in the stator core bore 126. The rotor core 130 can include a body 132 that includes a first end 134 and a second end 136 opposite the first end 134. The body 132 can include a first side 138 at the first end 134 of the body 132, a second side 140 at the second end 136 of the body 132, and an outer circumferential surface 142 that extends between the first side 138 and the second side 140. The body 132 can also include a bore 144 that longitudinally extends in an axial direction therethrough from the first end 134 to the second end 136. In some embodiments, the bore 144 can be colinear with the axis of rotation of the rotor core 130.

The body 132 of the rotor core 130 can include a plurality of slots 150 (FIG. 2) formed thereon that define one or more poles. The plurality of slots 150 can longitudinally extend through the body 132 from the first end 134 to the second end 136 and define the one or more poles at the rotor core 130. In this regard, the rotor core 130 can have a rotor core topology defined, at least in part, by the plurality of slots 150 formed in the body 132 so as to define the one or more poles of the rotor core 130 that provides the electric motor 102 with one or more desired operational characteristics, in accordance with the present disclosure.

The rotor core 130 can be made of a magnetically permeable material that can include, but is not limited to, iron, iron alloy, other like magnetically permeable materials, or any combination thereof. In some embodiments, the rotor core 130 can be made up of one or more rotor laminations (e.g., lamellas) that can be stacked together to form the body 132. The laminations can create a low-resistance path for current flow through the body 132, which can reduce eddy current losses in the electric motor 102. The laminations can also improve the strength of the rotor and improve the balance of the rotor core 130 in the electric motor 102 and the stator core 120. In an example, the rotor laminations can be connected together using one or more fasteners.

The electric motor 102 can include motor shaft 190. The motor shaft 190 can be positioned in the bore 144 of the rotor core 130. The motor shaft 190 can be fixedly coupled to the rotor core 130. The motor shaft 190 can also extend from at least one of the first end 104 or the second end 106 of the electric motor 102. The motor shaft 190 can be mechanically coupled to the rotor core 130 so as to enable the motor shaft 190 to translate the torque generated by the electric motor 102 and the rotor core 130 to an external device connected to the end of the motor shaft 190. The motor shaft 190 can be made of materials including, but not limited to, carbon steel, stainless steel, alloy steel, or any combination thereof. The materials used in the motor shaft 190 can be dependent on the motors specific requirements and application.

The electric motor 102 can include rotor cage 180. The rotor cage 180 can include a first ring member 182 located at the first end 134 of the body 132 and a second ring member 184 located at the second end 136 of the body 132. The first ring member 182 and second ring member 184 can be electrically conductive rings connected to each of the rotor bars 114 extending through the body 132. In this regard, the first ring member 182, second ring member 184, and each of the rotor bar 114 connected thereto can form the rotor cage 180 (e.g., squirrel-cage rotor) in the electric motor 102. In response to the rotating electromagnetic field created at the stator core winding(s) of stator core 120, an electric current can be induced at the rotor cage 180 to generate torque in the electric motor 102. The rotating electromagnetic field in the electric motor 102 can be configured to induce an electric current in the rotor cage 180 to create a secondary electromagnetic field at the rotor core 130 so as to decrease the locked rotor amps and increase the locked rotor torque at startup.

The rotor cage 180 can be formed of electrically conductive materials including but not limited to, copper, aluminum, or an alloy thereof. In some embodiments, the rotor cage 180 can be formed of a copper alloy. In other embodiments, the rotor cage 180 can be formed of an aluminum alloy.

FIG. 2 is a front sectional view of a portion of the system 100 in FIG. 1, according to some embodiments.

The system 100 can include stator core 120 and rotor core 130 in the electric motor 102. The stator core 120 can include stator core bore 126, and the stator core bore 126 can define inner surface 128 and the plurality of teeth 129 formed on inner surface 128.

The rotor core 130 can include body 132. The body 132 can include a rotor topology that defines one or more poles 146 (shown as 146a, 146b, 146c, 146d in FIG. 2). Each pole can be defined by the plurality of slots 150 (shown as 150a, 150b, 150c, 150d in FIG. 2) that longitudinally extend through the body 132 from the first end 134 to the second end 136. In some embodiments, the plurality of slots 150, or one or more of the slots thereof, can extend through the body 132 in a direction that is parallel to the axis A of body 132. In some embodiments, the plurality of slots 150, or one or more slots thereof, can extend through the body 132 in a direction that is angled relative the axis A such that the slots are skewed relative the axis A.

The number of poles that the body 132 includes can range from two poles to twenty poles. In some embodiments, the body 132 can define two poles. In some embodiments, the body 132 can define four poles. In some embodiments, the body 132 can define six poles. In some embodiments, the body 132 can define eight poles. In some embodiments, the body 132 can define ten poles. In some embodiments, the body 132 can define twelve poles. In some embodiments, the body 132 can define fourteen poles. In some embodiments, the body 132 can define sixteen poles. In some embodiments, the body 132 can define eighteen poles. In some embodiments, the body 132 can define twenty poles. In some embodiments, the body 132 can define twenty or more poles. In addition, each pole can include a radial centerline (R). It is to be appreciated that the number of poles of the rotor is not intended to be limiting but can instead be dependent on the desired operational characteristics of the motor. For example, the number of poles including in electric motor 102 can depend on a desired speed of the electric motor 102 for a given power supply frequency, and the speed of the electric motor 102 can decrease as the number of poles increases. In FIG. 2, the rotor core 130 is shown including four poles, and the four poles include radial centerlines R1, R2, R3, R4, respectively. However, it is to be appreciated that the rotor core 130 can include more or less poles depending on the desired operational characteristics of the electric motor 102.

The body 132 can define a flux guide through which a magnetic flux from the rotating electromagnetic field emitted by the stator core winding of stator core 120 passes the body 132. The magnetic flux passing through the body 132 can interact with one or more features of the electric motor 102 to generate torque. The magnetic flux is a measure of a total amount of magnetic field passing through a given surface or body such as, for example, the body 132. In some embodiments, the magnetic flux can interact with one or more slots of the plurality of slots 150 forming flux barriers at the pole to create anisotropy in the rotor's magnetic circuit so as to enable the motor to generate torque during operation. In some embodiments, the magnetic flux can interact with at least one permanent magnet 112 positioned in at least one slot of the plurality of slots 150 at the pole.

During synchronous operation of electric motor 102, the at least one permanent magnet 112 at each pole of the one or more poles 146 can provide a portion of the direct axis flux at the rotor core 130 such that a higher percentage of the current in the stator winding can be quadrature axis current, which can increase the power factor of the stator current. The quadrature axis current (q-axis) can be the direction of the magnetic flux in the rotor core 130 (e.g., armature) and can be utilized to analyze the magnetic field and reactive power in electric motor 102. The quadrature axis can be 90 degrees out of phase with the direct axis (d-axis). The direct axis can be the direction of the field flux. In some embodiments, the magnetic flux of the rotating electromagnetic field generated by the stator core 120 can interact with the at least one rotor bar 114 positioned in one or more other slots of the plurality of slots 150.

The at least one rotor bar 114 can form a rotor cage 180 with the first ring member 182 and second ring member 184 such that the magnetic flux passing through the body 132 induces an electric current in the rotor cage 180 for starting the electric motor 102 and such that the electric motor 102 can include a speed/torque curve similar to that of an induction motor at startup.

The rotor core 130 can have a unique topology that provides the electric motor 102 with one or more desired operational characteristics during one or more phases of operation of the electric motor 102, in accordance with the present disclosure. During a starting phase of the electric motor 102 operation, when the slip is a value of 1, a voltage can be induced at the at least one rotor bar 114 due to Faraday's Law from the rotating electromagnetic field. This induced voltage can direct electric current through the at least one rotor bar 114 and the rotor cage 180. The topology of the rotor core 130 can be configured to increase resistive losses in the rotor core 130 resulting in minimized locked rotor amps (e.g., starting amps) and maximized locked rotor torque (e.g., starting torque) and the topology can be configured to provide the electric motor 102 with a high power factor resulting in decreased resistive losses in the stator windings. In an example, the electric motor 102 can demonstrate similar starting characteristics to an induction motor or a line start synchronous reluctance motor but can demonstrate improved starting characteristics to a line start synchronous permanent magnet motor based on a comparison of corresponding speed/torque curves.

During the transition phase, as the rotor core 130 accelerates and the magnetic field passes the D axis of the electric motor 102, the reluctance forces can increase so as to cause the rotor core 130 to further accelerate. As the rotor core 130 approaches synchronous speed, if the load on the electric motor 102 is less than than the reluctance torque, the reluctance torque in the electric motor 102 can cause the rotor core 130 to accelerate to synchronous speed and the rotor core 130 can latch into synchronous operation. The rotor topology thereby enables the electric motor 102 to seamlessly switch between asynchronous and synchronous operation. In an example, the electric motor 102 can demonstrate similar starting characteristics to a reluctance motor based on a comparison of corresponding speed/torque curves.

During synchronous operation, at the electric motor 102, electric current does not flow through the at least one rotor bar 114 and therefore there is no resistive losses in the rotor cage 180 and the rotor core 130 due to induced current. The flux in the rotor core 130 will be DC. Since eddy current losses are proportional to the square of the frequency of the flux and hysteresis losses are proportional to the frequency of the flux, there is no core loss in the stator core 120. In addition, the at least one permanent magnet 112 in the rotor core 130 can provide a portion of the direct axis flux that would normally be provided by the stator core 120 windings. This enables a higher percentage of the electric current in the stator windings to be quadrature axis current, which increases the power factor of the stator current. Accordingly, during steady state operation, the rotor topology of the electric motor 102 can thereby reduce or eliminate low frequency losses in the rotor and the high power factor can result in decreased resistive losses at the stator core 120, and resistive loss in the at least one rotor bar 114. In an example, the electric motor 102 can demonstrate similar steady state operational characteristics as other line start permanent magnet motors but can demonstrate improved steady state operational characteristics as other line start synchronous reluctance motors based on a comparison of corresponding speed/torque curves.

In addition, when the load torque in the electric motor 102 increases beyond that provided by the reluctance torque, the rotor core 130 can lose slip and can begin to operate asynchronously. As such, electric current can again begin to flow in the at least one rotor bar 114 and the electric motor 102 can resume asynchronous operation. To resume synchronous operation at the electric motor 102, the load torque can be reduced by a certain percentage, which can vary as there can also be inherent hysteresis at the rotor core 130.

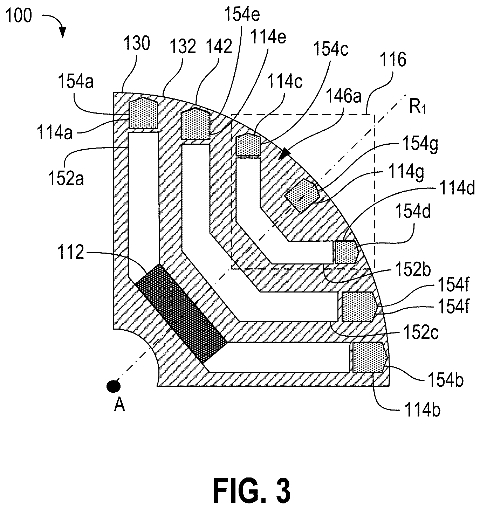

FIG. 3 is a front sectional view of a portion of the rotor core 130 of FIG. 1, according to some embodiments.

The rotor core 130 includes body 132. The body 132 includes one or more poles 146. In FIG. 3, the pole 146a of body 132 is shown. At pole 146a, the body 132 can define a plurality of slots 150. Each slot of the plurality of slots 150 can be one of a first slot 152 or a second slot 154. In some embodiments, the body 132 can include a plurality of first slots 152 and a plurality of second slots 154 at each pole of the one or more poles 146.

The plurality of first slots 152 can be positioned in a radial direction along a radial centerline (shown as R₁ in FIG. 3) between the axis A and the outer circumferential surface 142 of the body 132. In some embodiments, the plurality of first slots 152 can includes an inner slot 152a, an outer slots 152b, and at least one central slot 152c (body 132 is shown including one central slot 152c in FIG. 3). The inner slot 152a can include a first length, and the inner slot 152a can be positioned adjacent the axis of the body. The outer slot 152b can include a second length, and the outer slots 152b can be positioned between the inner slot 152a and the outer circumferential surface 142 of body 132. The at least one central slot 152c can include at least one third length, and the at least one central slot 152c can be located between the inner slot 152a and the outer slot 152b. In some embodiments, the first length can be greater than the second length and the at least one third length, and the at least one third length can be greater than the second length. In some embodiments, the plurality of first slots 152 can include the inner slot 152a, the outer slots 152b, and a plurality of central slots 152c positioned between the inner slot 152a and the outer slots 152b and arranged in the radial direction between the axis A and the plurality of first slots 152.

Each of the plurality of first slots 152 can include a u-shape. In some embodiments, each slot of the plurality of slots 152 can include a central portion and two end portions located at opposite ends of the central portion. In some embodiments, the central portion of each slot can be positioned radially inward relative the end portions so that each slot of the plurality of first slots forms the u-shape. In some embodiments, the central portion of each slot can extend in a direction that can be perpendicular to a direction of the radial centerline, and the two end portions can angularly extend from the respective ends of the central portion towards the outer circumferential surface 142 of body 132.

The plurality of second slots 154 can be positioned in a circumferentially outwardly direction between the plurality of first slots 152 and the outer circumferential surface 142 of the body 132. In some embodiments, one or more of the plurality of second slots 154 can be positioned adjacent an end of each of the plurality of first slots 152 such that the one or more of the plurality of second slots 154 are positioned between the respective end of each of the plurality of first slots 152 and the outer circumferential surface 142. In this regard, each end of the plurality of first slots 152 can include one of the plurality of second slots 154. In FIG. 3, the body 132 is shown including second slots 154a, 154b between the ends of inner slot 152a and outer circumferential surface 142, second slots 154c, 154d between the ends of outer slot 152b and outer circumferential surface 142, and second slots 154e, 154f between the ends of central slot 152c and outer circumferential surface 142.

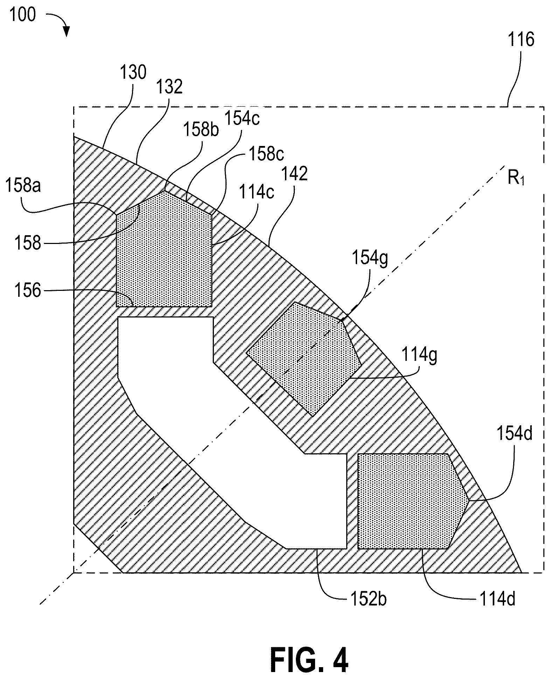

In addition, in some embodiments, one of the plurality of second slots 154 can be positioned between the plurality of first slots 152 and the outer circumferential surface 142 along the radial centerline. That is, one of the plurality of second slots 154 can be positioned between the outer slot 152b and the outer circumferential surface 142 on the radial centerline of the pole. In FIG. 4, the body 132 is shown including second slot 154g positioned between at least one central slot 152c and the outer circumferential surface 142 on radial centerline R₁.

In system 100 and electric motor 102, the rotor core 130 can include at least one permanent magnet 112. The at least one permanent magnet 112 can be positioned in at least one of the plurality of first slots 152. In some embodiments, the at least one permanent magnet 112 can be positioned in at least one slot of the plurality of first slots 152. In some embodiments, the at least one slot of plurality of first slots 152 can be adjacent the axis A of body 132 relative the other slots of the plurality of first slots 152. In some embodiments, the at least one permanent magnet 112 can be positioned in inner slot 152a. In some embodiments, the at least one permanent magnet 112 can be positioned in at least one of the at least one central slot 152c. In some embodiments, the body 132 can include a plurality of central slots 152c and the at least one permanent magnet 112 can be positioned in a slot of the plurality of central slots 152c that is adjacent the 152a relative the other slots of the plurality of central slots 152c. In some embodiments, the at least one permanent magnet 112 can include a first permanent magnet 112a and a second permanent magnet 112b located in inner slot 152a and at least one of the at least one central slot 152c. In FIG. 3, the at least one permanent magnet 112 is shown positioned in inner slot 152a.

The at least one permanent magnet 112 can generate a constant magnet field in the electric motor 102 rather than having to rely on the electromagnetic field of the stator winding coil of stator core 120 to induce the magnetic field in the rotor core 130. The at least one permanent magnet 112 can enable the electric motor 102 to have a higher power factor and minimizes rotor losses when in steady state operation. In this regard, during steady state operation, there may be no current flowing in the rotor bars 114, and therefore no resistive losses in the rotor cage 180 from induced current. In addition, the magnetic flux in the rotor core 130 can be DC. Since eddy current losses are proportional to the square of the frequency of the flux, and hysteresis losses are proportional to the frequency of the flux, the electric motor 102 may not demonstrate any core loss in the stator core 120. The at least one permanent magnet 112 in the body 132 can provide a portion of the flux (e.g., direct axis flux) that can normally be provided by the stator core windings. This can thereby result in a higher percentage of the current in the stator core winding being quadrature axis current, which can increase the power factor of the stator current. The rotor topology including the at least one permanent magnet 112 can thereby result in reduced stator resistive losses, which results in reduced stator current relative other synchronous reluctance motors.

In system 100 and electric motor 102, the rotor core 130 can include at least one rotor bar 114. The at least one rotor bar 114 can be positioned in at least one of the plurality of second slots 154. In some embodiments, the at least one rotor bar 114 can be positioned in each of the plurality of second slots 154. That is, each of the plurality of second slots 154 of the body 132 can include a rotor bar extending through the body 132 from the first end 134 to the second end 136. In FIG. 3, the body 132 is shown including rotor bar 114a in second slot 154a, rotor bar 114b in second slot 154b, rotor bar 114c in second slot 154c, rotor bar 114d in second slot 154d, rotor bar 114e in second slot 154e, rotor bar 114f in second slot 154f, and rotor bar 114g in second slot 154g.

The at least one rotor bar 114 can be made of electrically conductive metallic materials including, but not limited to, aluminum, copper, brass, alloys thereof, or any combination thereof, among other electrically conductive materials. In some embodiments, the rotor bars can be die-cast. For example, the rotor bars can be made of die-cast aluminum. It is to be appreciated that the shape and dimensions of the rotor bars 114 are not intended to be limiting and can include any of a plurality of shapes and dimensions to conform to the shape of a corresponding one of the plurality of second slots 154 and so as to meet any necessary design requirements, in accordance with the present disclosure. It is also to be appreciated that the material of the rotor bars 114 is not intended to be limiting and can include any of a plurality of materials so as to conform to a motor design requirement, in accordance with the present disclosure. For example, the size and dimensions of the plurality of second slots 154 (e.g., rotor bar slots) and the rotor bars 114 can be designed to meet NEMA design code. For example, the material of the rotor bars can be selected to meet NEMA design code.

FIG. 4 is an expanded view of the rotor core in FIG. 3, according to some embodiments.

Each of the plurality of second slots 154 can include a first side 156, and a second side 158 opposite the first side 156. The second side 158 of each of the plurality of second slots 154 can be located radially outward relative the first side 156. In this regard, the second side 158 of each of the plurality of second slots 154 can be located adjacent the outer circumferential surface 142 of the body 132. In addition, each of the plurality of second slots 154 can include a variable radial thickness. That is, at each of the plurality of second slots 154, the distance between the first side 156 and the second side 158 can vary. In some embodiments, a radial thickness of each of the plurality of second slots 154 can gradually increase from a first end 158a of the second side 158 towards a center 158b of the second side, and gradually decreases from the center 158b of the second side 158 towards a second end 158c of the second side 158. In some embodiments, a radial thickness of the body 132 between the second side 158 of each of the plurality of second slots 154 and the outer circumferential surface 142 can also gradually decrease from the first end 158a of the second side 158 towards the center 158b of the second side 158, and gradually increases from the center 158b of the second side 158 towards the second end 158c of the second side 158.

The rotor core 130 can include at least one rotor bar 114 located in each of the plurality of second slots 154. At each of the plurality of second slots 154, the corresponding at least one rotor bar 114 can include a suitable shape and dimensions that substantially conforms to a space of each of the plurality of second slots 154. In this regard, the shape and dimensions of the at least one rotor bar 114 positioned in each of the plurality of second slots 154 can be suitable to fill a space of the slot and can thereby also include a varying radial thickness between a corresponding first side and second side of the at least one rotor bar 114. In FIG. 4, the second slot 154c is shown including rotor bar 114c, the second slot 154d is shown including rotor bar 114d, and the second slot 154g is shown including rotor bar 114g.

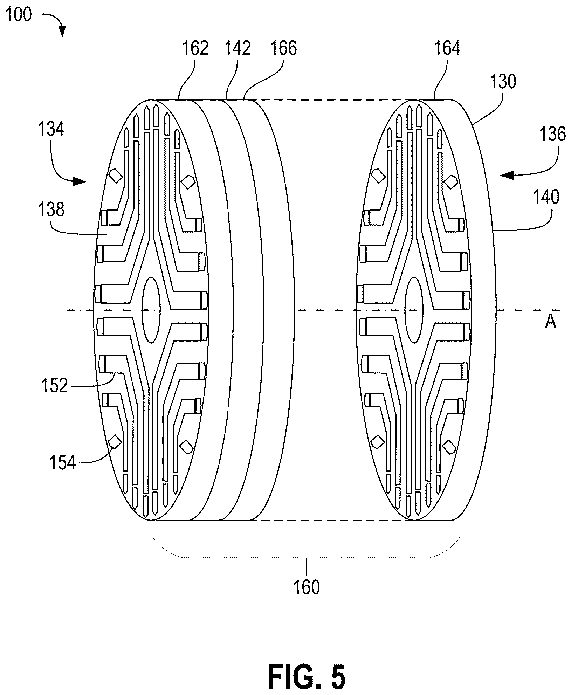

FIG. 5 is a side perspective view of the rotor core 130 in FIG. 1, according to some embodiments.

The rotor core 130 can include one or more laminations 160 (e.g., steel laminations). The one or more laminations 160 can be stacked together to form the body 132 such that the one or more laminations 160 are arranged between the first end 134 and the second end 136 of the body 132. In some embodiments, the one or more laminations 160 can include a first layer 162 forming the first side 138 and a second layer 164 forming the second side 140. The sides of the first layer 162 and the second layer 164 can define the outer circumferential surface 142 of the body 132. In some embodiments, the one or more laminations 160 can further include one or more intermediate layers 166 positioned between first layer 162 and second layer 164, and the first layer 162, the second layer 164, and the one or more intermediate layers 166 can define the outer circumferential surface 142.

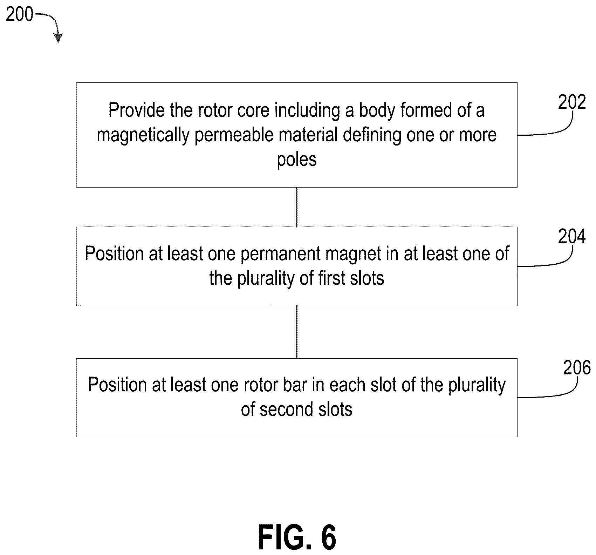

FIG. 6 is a flow diagram of an example method 200 for manufacturing a rotor core 130, according to some embodiments.

At 202, the method 200 can include providing the rotor core including a body formed of a magnetically permeable material defining one or more poles. The rotor core can be rotor core 130 as shown in FIG. 1 and the one or more poles can be similar to poles 146a, 146b, 146c, 146d as shown in FIG. 2. The rotor core can include a rotor topology configured to decrease a locked rotor amps and increase a locked rotor torque at startup of a rotating electric machine such as, for example, an electric motor including the rotor core.

Each pole can include a plurality of first slots positioned in a radial direction along a radial centerline between an axis and an outer circumferential surface of the body and a plurality of second slots positioned in a circumferentially outwardly direction between the plurality of first slots and the outer circumferential surface of the body, each end of each of the plurality of first slots is located adjacent one of the plurality of second slots. In FIG. 3, the plurality of first slots is shown as 152a, 152b, 152c, the radial centerline is shown as R₁, the outer circumferential surface is shown as outer circumferential surface 142, and the plurality of second slots adjacent the plurality of first slots are shown as 154a, 154b, 154c, 154d, 154e, 154f, 154g.

In some embodiments, the rotor core body can be formed to include the plurality of first slots. At the rotor core body, the plurality of first slots can be formed so as to include an inner slot that includes a first length positioned adjacent the axis of the body, an outer slot that includes a second length positioned between the inner slot and the outer circumferential surface, and at least one central slot that includes a respective third length located between the inner slot and the outer slot. In some embodiments, the first length of the inner slot can be greater than the second length of the outer slot and the third length of the corresponding at least one central slot, and the third length of the corresponding at least one central slot can be greater than the second length of the outer slot.

In some embodiments, the plurality of second slots can further include a slot positioned between the plurality of first slots and the outer circumferential surface along the radial centerline. In FIG. 3, the slot positioned between the plurality of first slots and the outer circumferential surface along the radial centerline is shown as second slot 154g.

In some embodiments, each of the plurality of second slots can include a first side and a second side opposite the first side, the second side being located radially outward relative the first side, and the second side being adjacent the outer circumferential surface of the body. In FIG. 4, the plurality of second slots is shown including second slots 154c, 154d, 154g, and the second slot 154c is shown including first side 156 and second side 158.

In some embodiments, each of the plurality of second slots can include a variable radial thickness between the first side and the second side. In FIG. 4, the variable radial thickness is shown as the varying thickness between first side 156 and second side 158 in the circumferential direction. In some embodiments, a radial thickness of each of the plurality of second slots can gradually increase from a first end of the second side towards a center of the second side and can gradually decrease from the center of the second side towards a second end of the second side. In FIG. 4, the first end of the second side is shown as first end 158a of second side 158, the center of the second side is shown as center 158b of second side 158, and the second end of the second side is shown as second end 158c of second side 158.

In some embodiments, a radial thickness of the body between the second side of each of the plurality of second slots and the outer circumferential surface can gradually decrease from the first end of the second side towards the center of the second side and can gradually increase from the center of the second side towards the second end of the second side. In some embodiments, the at least one rotor bar can fill a space of each of the plurality of second slots defined by the variable radial thickness. In FIG. 4, the body 132 is shown including a varying radial thickness between the first end 158a of second side 158 and outer circumferential surface 142, the center 158b of second side 158 and outer circumferential surface 142, and the second end 158c of second side 158 and outer circumferential surface 142.

At 204, the method 200 can include positioning at least one permanent magnet in at least one of the plurality of first slots. In some embodiments, the at least one permanent magnet can be positioned in a slot of the plurality of first slots nearest the central longitudinal axis of the rotor body. The at least one permanent magnet can be configured to provide a portion of a direct axis flux at the rotor core so as to increase a power factor of a stator current of a stator during steady state operation of the electric machine including the rotor core. In FIG. 3, the at least one permanent magnet is shown as at least one permanent magnet 112.

In some embodiments, the at least one permanent magnet can be located in one or more of the plurality of first slots. In some embodiments, the method 200 can further include positioning a first magnet in a first slot of the plurality of slots. In some embodiments, the method 200 can further include positioning a first magnet in a first slot of the plurality of slots and a second magnet in a second slot of the plurality of slots. In some embodiments, the method 200 can further include positioning a first magnet in an inner slot of the plurality of slots and a second magnet in a slot of at least one central slot that is nearest the inner slot. In FIG. 2, the inner slot is shown as 152a and the at least one central slot is shown as 154c.

At 206, the method 200 can include positioning at least one rotor bar in each slot of the plurality of second slots. In FIG. 3, the plurality of second slots is shown as 154a, 154b, 154c, 154d, 154e, 154f, 154g, and the plurality of second slots is shown including rotor bars 114a, 114b, 114c, 114d, 114e, 114f, 114g in a respective slot.

In some embodiments, the rotor core can be configured to be installed in the rotating electric machine so as to be rotatable about the axis. In FIG. 1, the rotating electric machine is shown as electric motor 102, the rotor core is shown as rotor core 130, and the axis is shown as axis A.

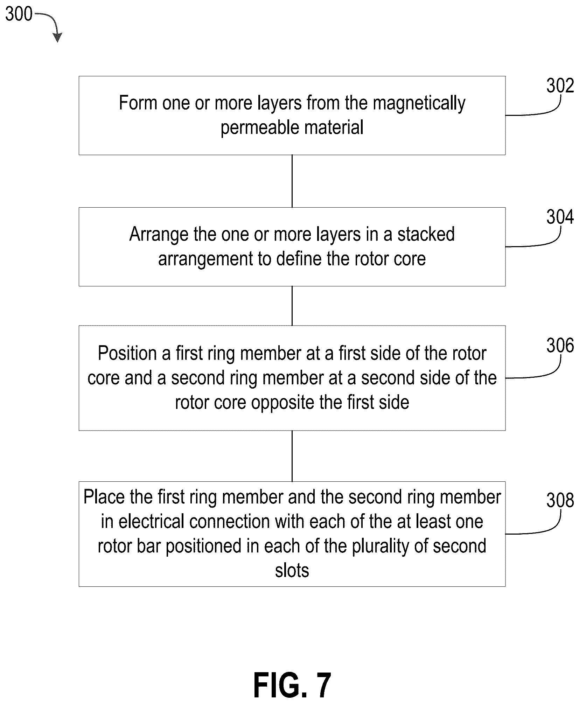

FIG. 7 is a flow diagram of an example method 300 for manufacturing the rotor core, according to some embodiments. The method 300, or one or more portions thereof, can be an embodiment of steps 202, 204, 206, 208 of method 200 in FIG. 2.

At 302, the method 300 can include forming one or more layers from the magnetically permeable material. Each layer can include the plurality of first slots and the plurality of second slots extending therethrough in an axial direction. In FIG. 5, the one or more layer is shown as one or more laminations 160 including first layer 162, second layer 164, and one or more intermediate layers 166.

At 304, the method 300 can include arranging the one or more layers in a stacked arrangement to define the rotor core. In FIG. 5, the rotor core is shown as rotor core 130 including the first layer 162, second layer 164, and one or more intermediate layers 166 in the stacked arrangement.

At 306, the method 300 can include positioning a first ring member at a first side of the rotor core and a second ring member at a second side of the rotor core opposite the first side. In FIG. 1, the first ring member is shown as first layer 162 and the second ring member is shown as second layer 164.

At 306, the method 300 can include placing the first ring member and the second ring member in electrical connection with each of the at least one rotor bar positioned in each of the plurality of second slots.

In some embodiments, the rotating electromagnetic field of a stator in the electric machine including the rotor core can be configured to induce an electric current in a rotor cage including the first ring member, second ring member, and the at least one rotor bar, so as to create a secondary electromagnetic field to decrease a locked rotor amps and increase a locked rotor torque at startup of the electric machine.

All prior patents and publications referenced herein are incorporated by reference in their entireties.

Throughout the specification and claims, the following terms take the meanings explicitly associated herein, unless the context clearly dictates otherwise. The phrases "in one embodiment," "in an embodiment," and "in some embodiments" as used herein do not necessarily refer to the same embodiment(s), though it may. Furthermore, the phrases "in another embodiment" and "in some other embodiments" as used herein do not necessarily refer to a different embodiment, although it may. All embodiments of the disclosure are intended to be combinable without departing from the scope or spirit of the disclosure.

As used herein, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "between" does not necessarily require being disposed directly next to other elements. Generally, this term means a configuration where something is sandwiched by two or more other things. At the same time, the term "between" can describe something that is directly next to two opposing things. Accordingly, in any one or more of the embodiments disclosed herein, a particular structural component being disposed between two other structural elements can be:
disposed directly between both of the two other structural elements such that the particular structural component is in direct contact with both of the two other structural elements;
disposed directly next to only one of the two other structural elements such that the particular structural component is in direct contact with only one of the two other structural elements;
disposed indirectly next to only one of the two other structural elements such that the particular structural component is not in direct contact with only one of the two other structural elements, and there is another element which juxtaposes the particular structural component and the one of the two other structural elements;
disposed indirectly between both of the two other structural elements such that the particular structural component is not in direct contact with both of the two other structural elements, and other features can be disposed therebetween; or
any combination(s) thereof.

As used herein "embedded" means that a first material is distributed throughout a second material.

As used herein, "anisotropy" in a rotor is a structural property that describes how the rotor's magnetic properties can vary depending on direction of measurement, and that can cause fluctuations in the rotating electromagnetic field of the electric motor.

As used herein, the term "asynchronous operation" refers to the difference in speed between the rotor and the magnetic field of the stator, also referred to as slip, due to the rotor rotating slower than the synchronous speed of the stator's rotating magnetic field. This slip is utilized to generate torque in the motor.

As used herein, the term "across-the-line" refers to a method of starting a rotating electric machine in which a voltage from a power source can be directly applied to the motor windings.

As used herein, the term "hysteresis" refers to when the magnetization of the rotor lags behind the rotating electromagnetic field created by the stator, which produces hysteresis torque at the rotor.

As used herein, the term "line start" refers to a type of motor that operates at a fixed voltage and frequency. The motor can include a squirrel cage that accelerates the motor from standstill when started "across the line," the motor being excited by the magnets in the rotor and partly by the line current.

As used herein, the term "locked rotor amps" refers to an amount of electric current an electric motor draws when the rotor is locked or at a standstill and power is supplied to the terminals. In this regard, as the speed of the motor increases, the amount of electric current the electric motor draws decreases.

As used herein, the term "locked rotor torque" refers to a maximum torque an electric motor can produce when first started, when the rotor is at a standstill (e.g., starting torque). The torque must be enough to overcome the electric motor's initial inertia to cause rotation of the rotor.

As used herein, the term "saliency" refers to the poles in an electric machine that project from the surface of the stator or rotor.

As used herein, the term "steady state operation" refers to when the motor torque is equal to the load torque such that the motor can maintain a consistent speed and torque output under normal operating conditions.

As used herein, the term "synchronous operation" refers to when the motor's rotor rotates at a constant speed that matches the frequency of the AC supply, and thereby is synchronized with the rotating electromagnetic field produced by the stator.

### ASPECTS

Various Aspects are described below. It is to be understood that any one or more of the features recited in the following Aspect(s) can be combined with any one or more other Aspect(s).

Aspect 1. A rotor of an electric machine comprising: a rotor core comprising a body rotatable about an axis and comprising a first side, a second side, and an outer circumferential surface extending between the first side and the second side, the body comprising a plurality of slots extending through the body from the first side to the second side defining one or more poles, the plurality of slots comprising: a plurality of first slots positioned in a radial direction along a radial centerline between the axis and the outer circumferential surface of the body, and a plurality of second slots positioned in a circumferentially outwardly direction between the plurality of first slots and the outer circumferential surface of the body, wherein each end of each of the plurality of first slots is located adjacent one of the plurality of second slots; at least one permanent magnet positioned in at least one of the plurality of first slots; and at least one rotor bar positioned in each of the plurality of second slots.

Aspect 2. The rotor according to aspect 1, further comprising: a cage comprising: a first ring member located at a first end of the body, and a second ring member located at a second end of the body, wherein each of the at least one rotor bar is in electrical connection with the first ring member and the second ring member, wherein a rotating electromagnetic field in the electric machine being configured to induce an electric current in the cage to create a secondary electromagnetic field at the rotor core, and wherein the rotor core comprises a rotor topology configured to decrease a locked rotor amps and increase a locked rotor torque at startup of the electric machine.

Aspect 3. The rotor according to any of the preceding aspects, wherein the body comprises one or more layers in a stacked arrangement comprising at least a first layer defining the first side and a second layer defining the second side, and the first layer and the second layer defining the outer circumferential surface.

Aspect 4. The rotor according to any of the preceding aspects, wherein the plurality of first slots comprises: an inner slot comprising a first length positioned adjacent the axis of the body, an outer slot comprising a second length positioned between the inner slot and the outer circumferential surface, and at least one central slot comprising at least one third length located between the inner slot and the outer slot, wherein the first length is greater than the second length and the at least one third length, and the at least one third length is greater than the second length, and wherein the at least one permanent magnet is configured to provide a portion of a direct axis flux at the rotor core so as to increase a power factor of a stator current of a stator during steady state operation, the electric machine including the stator to generate a rotating electromagnetic field in response to electric current being applied to one or more electrical conductors wound through the stator.

Aspect 5. The rotor according to aspect 4, wherein the at least one permanent magnet comprises a first magnet positioned in at least one of the inner slot or the at least one central slot.

Aspect 6. The rotor according to aspects 4 or 5, wherein the at least one permanent magnet comprises: a first permanent magnet positioned in the inner slot, and a second permanent magnet positioned in the at least one central slot.

Aspect 7. The rotor according to any of the preceding aspects, wherein each of the plurality of first slots comprises a central portion extending radially inwardly relative a respective ends so that each of the plurality of first slots forms a u-shape.

Aspect 8. The rotor according to any of the preceding aspects, wherein the plurality of second slots further comprises a slot positioned between the plurality of first slots and the outer circumferential surface along the radial centerline.

Aspect 9. The rotor according to any of the preceding aspects, wherein each of the plurality of second slots comprises: a first side, and a second side opposite the first side, wherein the second side is located radially outward relative the first side, and the second side is adjacent the outer circumferential surface of the body, and wherein each of the plurality of second slots comprises a variable radial thickness between the first side and the second side, and wherein the at least one rotor bar fills a space of each of the plurality of second slots defined by the variable radial thickness.

Aspect 10. The rotor according to aspect 9, wherein a radial thickness of each of the plurality of second slots gradually increases from a first end of the second side towards a center of the second side, and gradually decreases from the center of the second side towards a second end of the second side, and wherein a radial thickness of the body between the second side of each of the plurality of second slots and the outer circumferential surface gradually decreases from the first end of the second side towards the center of the second side, and gradually increases from the center of the second side towards the second end of the second side.

Aspect 11. A rotating electric machine comprising: a stator core; and a rotor core comprising a body comprising one or more layers, the body being rotatable about an axis and comprising a first side, a second side, and an outer circumferential surface extending between the first side and the second side, the body comprising a plurality of slots extending through the body from the first side to the second side defining one or more poles, the plurality of slots comprising: a plurality of first slots positioned in a radial direction along a radial centerline between the axis and the outer circumferential surface of the body, a plurality of second slots positioned in a circumferentially outwardly direction between the plurality of first slots and the outer circumferential surface of the body, at least one permanent magnet positioned in at least one of the plurality of first slots, and at least one rotor bar positioned in each of the plurality of second slots, wherein each end of each of the plurality of first slots is located adjacent one of the plurality of second slots.

Aspect 12. The rotating electric machine according to aspect 11, further comprising: a cage comprising: a first ring member located at a first end of the body, and a second ring member located at a second end of the body, wherein each of the at least one rotor bar positioned in each of the plurality of second slots is in electrical connection with the first ring member and the second ring member; and a shaft member axially extending through the rotor core, the shaft member configured to translate a rotation of the rotor core to another device, wherein the rotor core comprises a rotor topology configured to decrease a locked rotor amps and increase a locked rotor torque during startup of the rotating electric machine and configured to have a high power factor resulting in reduced resistive losses in a stator core during steady state operation.

Aspect 13. The rotating electric machine according to aspects 11 or 12, wherein the plurality of first slots comprises: an inner slot comprising a first length positioned adjacent the axis of the body, an outer slot comprising a second length positioned between the inner slot and the outer circumferential surface, and at least one central slot comprising at least one third length located between the inner slot and the outer slot, wherein the first length is greater than the second length and the at least one third length, and the at least one third length is greater than the second length, and wherein the at least one permanent magnet comprises a first magnet positioned in at least one of the inner slot or the at least one central slot, and wherein the at least one permanent magnet is configured to provide a portion of a direct axis flux at the rotor core so as to increase a power factor of a stator current of a stator during steady state operation.

Aspect 14. The rotating electric machine according to aspect 13, wherein the at least one permanent magnet comprises: a first permanent magnet positioned in the inner slot, and a second permanent magnet positioned in the at least one central slot.

Aspect 15. The rotating electric machine according to aspects 11, 12, 13, or 14, wherein each of the plurality of first slots comprises a central portion extending radially inwardly relative a respective ends so that each of the plurality of first slots forms a u-shape, and wherein the plurality of second slots further comprises a slot positioned between the plurality of first slots and the outer circumferential surface along the radial centerline.

Aspect 16. The rotating electric machine according to aspects 11, 12, 13, 14, or 15, wherein each of the plurality of second slots comprises: a first side, and a second side opposite the first side, wherein the second side is located radially outward relative the first side, and the second side is adjacent the outer circumferential surface of the body, and wherein each of the plurality of second slots comprises a variable radial thickness between the first side and the second side, and wherein the at least one rotor bar fills a space of each of the plurality of second slots defined by the variable radial thickness.

Aspect 17. The rotating electric machine according to aspects 11, 12, 13, 14, 15, or 16, wherein a radial thickness of each of the plurality of second slots gradually increases from a first end of the second side towards a center of the second side, and gradually decreases from the center of the second side towards a second end of the second side, and wherein a radial thickness of the body between the second side of each of the plurality of second slots and the outer circumferential surface gradually decreases from the first end of the second side towards the center of the second side, and gradually increases from the center of the second side towards the second end of the second side.

Aspect 18. A method for assembling a rotor core of a rotating electric machine, the method comprising: providing the rotor core comprising a body defining one or more poles, wherein each pole comprises a plurality of first slots positioned in a radial direction along a radial centerline between an axis and an outer circumferential surface of the body and a plurality of second slots positioned in a circumferentially outwardly direction between the plurality of first slots and the outer circumferential surface of the body, wherein each end of each of the plurality of first slots is located adjacent one of the plurality of second slots, and wherein the plurality of second slots further comprises a slot positioned between the plurality of first slots and the outer circumferential surface along the radial centerline; positioning at least one permanent magnet in at least one of the plurality of first slots; and positioning at least one rotor bar in each slot of the plurality of second slots, wherein the rotor core is rotatable about the axis in the rotating electric machine.

Aspect 19. The method according to aspect 18, further comprising: forming one or more layers from a magnetically permeable material, each layer comprising the plurality of first slots and the plurality of second slots extending therethrough; arranging the one or more layers in a stacked arrangement to define the rotor core; positioning a first ring member at a first side of the rotor core and a second ring member at a second side of the rotor core opposite the first side; and placing the first ring member and the second ring member in electrical connection with each of the at least one rotor bar positioned in each of the plurality of second slots, wherein the rotor core comprises a rotor topology configured to decrease a locked rotor amps and increase a locked rotor torque at startup at the rotating electric machine, a high power factor resulting in decreased resistive losses in a stator, and seamlessly transition between startup and steady state operation.

Aspect 20. The method according to aspects 18 or 19, wherein: the plurality of first slots comprises: an inner slot comprising a first length positioned adjacent the axis of the body, an outer slot comprising a second length positioned between the inner slot and the outer circumferential surface, and at least one central slot comprising at least one third length located between the inner slot and the outer slot, wherein the first length being greater than the second length and the at least one third length, and the at least one third length being greater than the second length, and the at least one permanent magnet comprises a first magnet positioned in at least one of the inner slot or the at least one central slot, and each of the plurality of second slots comprises: a first side, and a second side opposite the first side, the second side being located radially outward relative the first side, and the second side being adjacent the outer circumferential surface of the body, wherein each of the plurality of second slots comprises a variable radial thickness between the first side and the second side, a radial thickness of each of the plurality of second slots gradually increases from a first end of the second side towards a center of the second side, and gradually decreases from the center of the second side towards a second end of the second side, and a radial thickness of the body between the second side of each of the plurality of second slots and the outer circumferential surface gradually decreases from the first end of the second side towards the center of the second side, and gradually increases from the center of the second side towards the second end of the second side, and the at least one rotor bar fills a space of each of the plurality of second slots defined by the variable radial thickness.

It is to be understood that changes may be made in detail, especially in matters of the construction materials employed and the shape, size, and arrangement of parts without departing from the scope of the present disclosure. This Specification and the embodiments described are examples, with the true scope and spirit of the disclosure being indicated by the claims that follow.

## Claims

1. A rotor of an electric machine comprising:
a rotor core (130) comprising a body (132) rotatable about an axis (A) and
comprising a first side (138), a second side (140), and an outer circumferential surface (142) extending between the first side (138) and the second side (140),
the body (132) comprising a plurality of slots (150) extending through the body (132) from the first side (138) to the second side (140) defining one or more poles (146), the plurality of slots (150) comprising:
a plurality of first slots (152) positioned in a radial direction along a radial centerline (R₁, R₂, R₃, R₄) between the axis (A) and the outer circumferential surface (142) of the body (132), and
a plurality of second slots (154) positioned in a circumferentially outwardly direction between the plurality of first slots (152) and the outer circumferential surface (142) of the body (132),
wherein each end of each of the plurality of first slots (152) is located adjacent one of the plurality of second slots (154);
at least one permanent magnet (112) positioned in at least one of the plurality of first slots (152); and
at least one rotor bar (114) positioned in each of the plurality of second slots (154).

2. The rotor of claim 1, further comprising:
a cage (180) comprising:
a first ring member (182) located at a first end (104) of the body (132), and
a second ring member (184) located at a second end (106) of the body (132),
wherein each of the at least one rotor bar (114) is in electrical connection with the first ring member (182) and the second ring member (184), wherein a rotating electromagnetic field in the electric machine being configured to induce an electric current in the cage (180) to create a secondary electromagnetic field at the rotor core (130), and wherein the rotor core (130) comprises a rotor topology configured to decrease a locked rotor amps and increase a locked rotor torque at startup of the electric machine.

3. The rotor of claim 1, wherein the body (132) comprises one or more layers (162, 164, 166) in a stacked arrangement comprising at least a first layer (162) defining the first side (138) and a second layer (164) defining the second side (140), and the first layer (162) and the second layer (164) defining the outer circumferential surface (142).

4. The rotor of claim 1, wherein the plurality of first slots (152) comprises:
an inner slot (152a) comprising a first length positioned adjacent the axis (A) of the body (132),
an outer slot (152b) comprising a second length positioned between the inner slot (152a) and the outer circumferential surface (142), and
at least one central slot (152c) comprising at least one third length located between the inner slot (152a) and the outer slot (152b),
wherein the first length is greater than the second length and the at least one third length, and the at least one third length is greater than the second length,
and wherein the at least one permanent magnet (112) is configured to provide a portion of a direct axis flux at the rotor core (130) so as to increase a power factor of a stator current of a stator during steady state operation, the electric machine including the stator to generate a rotating electromagnetic field in response to electric current being applied to one or more electrical conductors wound through the stator.

5. The rotor of claim 4, wherein the at least one permanent magnet (112) comprises a first magnet positioned in at least one of the inner slot (152a) or the at least one central slot (152c).

6. The rotor of claim 4, wherein the at least one permanent magnet (112) comprises:
a first permanent magnet positioned in the inner slot (152a), and
a second permanent magnet positioned in the at least one central slot (152c).

7. The rotor of claim 1, wherein each of the plurality of first slots (152) comprises a central portion extending radially inwardly relative a respective ends so that each of the plurality of first slots (152) forms a u-shape.

8. The rotor of claim 1, wherein the plurality of second slots (154) further comprises a slot (154g) positioned between the plurality of first slots (152) and the outer circumferential surface (142) along the radial centerline (R₁, R₂, R₃, R₄).

9. The rotor of claim 1, wherein each of the plurality of second slots (154) comprises:
a first side (156), and
a second side (158) opposite the first side (156),
wherein the second side (158) is located radially outward relative the first side (156), and the second side (158) is adjacent the outer circumferential surface (142) of the body (132), and wherein each of the plurality of second slots (154) comprises a variable radial thickness between the first side (156) and the second side (158), and wherein the at least one rotor bar (114) fills a space of each of the plurality of second slots (154) defined by the variable radial thickness.

10. The rotor of claim 9, wherein a radial thickness of each of the plurality of second slots (154) gradually increases from a first end (158a) of the second side (158) towards a center (158b) of the second side (158), and gradually decreases from the center (158b) of the second side (158) towards a second end (158c) of the second side (158), and
wherein a radial thickness of the body (132) between the second side (158c) of each of the plurality of second slots (158) and the outer circumferential surface (142) gradually decreases from the first end (158a) of the second side (158) towards the center (158b) of the second side (158), and gradually increases from the center (158b) of the second side (158) towards the second end (158c) of the second side (158).

11. A rotating electric machine comprising:
a stator core (120); and a rotor according to one of the previous claims.

12. The rotating electric machine of claim 11, further comprising:
a shaft member (190) axially extending through the rotor core (130), the shaft member (190) configured to translate a rotation of the rotor core (130) to another device,
wherein the rotor core (130) comprises a rotor topology configured to decrease a locked rotor amps and increase a locked rotor torque during startup of the rotating electric machine and configured to have a high power factor resulting in reduced resistive losses in the stator core (120) during steady state operation.

13. A method for assembling a rotor of a rotating electric machine according to one of the claims 1 to 10, the method comprising:
providing (202) the rotor core (130) comprising a body (132) defining one or more poles (146),
wherein each pole (146) comprises a plurality of first slots (152) positioned in a radial direction along a radial centerline (R₁, R₂, R₃, R₄) between an axis (A) and an outer circumferential surface (142) of the body (132) and a plurality of second slots (154) positioned in a circumferentially outwardly direction between the plurality of first slots (152) and the outer circumferential surface (142) of the body (132), wherein each end of each of the plurality of first slots (152) is located adjacent one of the plurality of second slots (154), and wherein the plurality of second slots (154) further comprises a slot (154g) positioned between the plurality of first slots (152) and the outer circumferential surface (142) along the radial centerline (R₁, R₂, R₃, R₄);
positioning (204) at least one permanent magnet (112) in at least one of the plurality of first slots (112); and
positioning (206) at least one rotor bar (114) in each slot (154) of the plurality of second slots (154),
wherein the rotor core (130) is rotatable about the axis (A) in the rotating electric machine.

14. The method of claim 13, further comprising:
forming (302) one or more layers (162, 164, 166) from a magnetically permeable material, each layer (162, 164, 166) comprising the plurality of first slots (152) and the plurality of second slots (154) extending therethrough;
arranging (304) the one or more layers (162, 164, 166) in a stacked arrangement to define the rotor core (130);
positioning (306) a first ring member (182) at a first side (138) of the rotor core (130) and a second ring member (184) at a second side (140) of the rotor core (130) opposite the first side (138); and
placing (308) the first ring member (182) and the second ring member (184) in electrical connection with each of the at least one rotor bar (114) positioned in each of the plurality of second slots (154),
wherein the rotor core (130) comprises a rotor topology configured to decrease a locked rotor amps and increase a locked rotor torque at startup at the rotating electric machine, a high power factor resulting in decreased resistive losses in a stator, and seamlessly transition between startup and steady state operation.
